# EUROPÄISCHE PATENTSCHRIFT

(11) **EP 1 358 451 B1**
(45) Veröffentlichungstag und Bekanntmachung des Hinweises auf die Patenterteilung: **28.03.2007**
(21) Anmeldenummer: 02716742.8
(22) Anmeldetag: 07.02.2002
(51) Int. Cl.: G01G 19/414, G01G 23/36

(54) **DRAHTLOSWÄGEVORRICHTUNG MIT MEHREREN FUNKTIONSEINHEITEN**
WIRELESS WEIGHING DEVICE COMPRISING A PLURALITY OF FUNCTIONAL UNITS
DISPOSITIF DE PESEE SANS FIL COMPRENANT PLUSIEURS UNITES FONCTIONNELLES

(30) Priorität: 07.02.2001 DE 10105535
(43) Veröffentlichungstag der Anmeldung: 05.11.2003
(73) Patentinhaber: Mettler-Toledo (Albstadt) GmbH, 72458 Albstadt (DE)
(72) Erfinder: MÜRDTER, Herbert, 72461 Albstadt (DE)
(74) Vertreter: Leinweber & Zimmermann
(86) Internationale Anmeldenummer: PCT/EP2002/001285
(87) Internationale Veröffentlichungsnummer: WO 2002/063255

(56) Entgegenhaltungen:
- EP-A- 0 382 016
- DE-A- 2 942 420
- DE-A- 19 753 627
- DE-A- 19 858 625
- JP-A- 62 062 223
- US-A- 4 969 112
- US-A- 6 006 100
- US-A- 6 105 004
- PATENT ABSTRACTS OF JAPAN vol. 1998, no. 08, 30. Juni 1998 (1998-06-30) & JP 10 073475 A (KUBOTA CORP), 17. März 1998 (1998-03-17)

## Beschreibung

Die Erfindung bezieht sich auf eine Wägevorrichtung mit mehreren Funktionseinheiten, von denen jeweils mindestens zwei durch eine Signalverbindung miteinander gekoppelt sind und von denen mindestens eine eine von mehreren Verkaufspersonen gemeinsam benutzbare Wägezelle zur Bildung eines dem Gewicht eines auf die Wägezelle aufgelegten Wiegegutes entsprechenden elektrischen Signals, mindestens eine eine Auswerteeinheit zur Bildung eines in einem Maßsystem ausgedrückten Gewichtswertes aus dem über die betreffende Signalverbindung zugeleiteten Gewichtssignal, mindestens eine eine Anzeigeeinheit zur Anzeige des über die betreffende Signalverbindung zugeleiteten Gewichtswertes, mindestens eine eine Steuereinheit zur Steuerung des Betriebs der Wägevorrichtung aufweist und von denen mehrere einen Transponder aufweisen, der über die die Steuereinheit aufweisende Funktionseinheit abfragbar ist und ansprechend auf diese Abfrage einen in dem Transponder niedergelegten persönlichen Identifikationskode der betreffenden Verkaufsperson an die Wägevorrichtung überträgt, die dadurch automatisch die Zugriffsberechtigung der betreffenden Verkaufsperson auf die Wägevorrichtung prüft und der betreffenden Verkaufsperson den von ihr mit Hilfe der Wägevorrichtung durchgeführten Verkaufsvorgang zuordnet.

Bei einer bekannten Wägevorrichtung der eingangs genannten Art (DE-A-29 42 420) ist jedem der Transponder ein Speicher oder Speicherbereich zugeordnet, in dem die den jeweiligen Verkaufsvorgang betreffenden Daten abgelegt werden. Infolge der hierdurch bewirkten Zuordnung zwischen der jeweiligen Verkaufsperson und dem von ihr durchgeführten Verkaufsvorgang ist die gemeinsame Benutzung ein und derselben Wägezelle möglich, ohne daß die zu den einzelnen Verkaufsvorgängen gehörenden Daten vermischt werden. Weiterhin ist eine einzige Anzeigeeinheit vorgesehen, an die die gespeicherten Daten auf Abruf weiterleitbar sind. Auch können mehrere Wägezellen zusammengeschaltet sein, wobei ihre bei den Verkaufsvorgängen erzeugten Daten unter Aufrechterhaltung der Zuordnung zu der jeweiligen Verkaufsperson in den Speicher oder die Speicherbereiche eingegeben werden. Auch in diesem Fall erfolgt die Anzeige auf der einzigen Anzeigeeinheit. Der Umstand, daß für die Anzeige der von den unterschiedlichen Verkaufspersonen insbesondere gleichzeitig oder zeitlich überlappend durchgeführten Verkaufsvorgänge nur diese einzige Anzeigeeinheit zur Verfügung steht, stellt eine Erschwernis für die Verkaufspersonen dar, welche jeweils den sie betreffenden Verkaufsvorgang auf der Anzeigeeinheit verfolgen und überwachen möchten. Es kommt hinzu, daß die Anzeigeeinheit mit den übrigen Einheiten der Wägevorrichtung drahtverbunden ist und deshalb nicht ohne weiteres dort positioniert werden kann, wo sie für die jeweilige Verkaufsperson ergonomisch günstig einsehbar ist.

Es ist bekannt (US-A-6 105 004), die Regale eines Verkaufslokals mit elektronischen Regaletiketten zu versehen, in die von einer Zentraleinheit aus durch drahtlose Übertragung jeweils eine Produktidentifikationsinformation und eine Preisinformation einspeicherbar ist. Das Regaletikett kann außerdem eine elektronische preisrechnende Waage aufweisen, die ebenfalls drahtlos von der Zentrale Preisinformationen erhält und daraus den Preis einer abgewogenen Warenmenge berechnet. Weiterhin ist eine Anzahl tragbarer Einheiten vorgesehen, die bei hinreichender Annäherung und Ausrichtung selektiv mit jedem einzelnen Regaletikett und jeder einzelnen Waage drahtlos kommunizieren können. Jeder Käufer bedient sich zum Einkauf einer dieser tragbaren Einheiten, indem er sie aus hinreichender Nähe auf das Regaletikett der zu kaufenden Ware oder auf die die zu kaufende Ware wiegende Waage ausrichtet und dadurch die betreffenden Preisdaten und zugehörigen Produktidentifikationsdaten in seine tragbare Einheit einliest. In das elektronische Regaletikett, die elektronische Waage und die tragbare Einheit kann jeweils ein Sichtanzeigefeld integriert sein, welches die in der jeweiligen Einheit erzeugten oder von einer der anderen Einheiten übernommenen Preis- und Produktidentifikationsdaten anzeigt. Wegen dieser räumlichen Integration können daher die von der preisrechnenden Waage zur Verfügung gestellten Daten nur an der Waage und an der tragbaren Einheit angezeigt werden, während die Anzeige an einer davon räumlich getrennten Stelle nicht möglich ist. Würde sie statt des Gebrauchs durch Kunden im Selbstbedienungsverkauf von Verkäufern benutzt werden, könnte die Anzeige nicht an unter ergonomischen Gesichtspunkten frei wählbaren Positionen erfolgen. Außerdem würde keine Zuordnung zwischen den diese Waagen benutzenden Verkäufern und ihren Verkaufsvorgängen stattfinden.

Es ist bekannt (JP-A-62062223), den der Gewichtserfassung dienenden Teil einer Wägevorrichtung und den der Anzeige der Gewichtsdaten dienenden Teil räumlich voneinander zu trennen und die anzuzeigenden Daten zwischen den beiden Teilen drahtlos zu übertragen.

Weiterhin ist es bekannt (EP 0 382 016 A2), Funktionseinheiten einer Wägevorrichtung, nämlich einen den Wägebetrieb steuernden Mikroprozessor und seinen Speicher, eine Anzeigeeinheit, eine Tastatur und einen Drucker, durch eine Busleitung miteinander zu verbinden. Diese Funktionseinheiten bilden eine fest zusammenhängende räumliche Einheit. Insbesondere ist die einzige Anzeigeeinheit durch eine Metallstrebe an einem Gehäuse abgestützt, das die übrigen Funktionseinheiten beinhaltet. Ferner ist eine drahtlose Signalverbindung zu einer zentralen Steuereinheit vorhanden. Der drahtlose Verkehr zwischen dieser zentralen Steuereinheit und der Wägevorrichtung dient jedoch nur dazu, Einstelldaten in den Speicher der Wägevorrichtung einzugeben oder einen Datensammelbefehl auszugeben und Daten aus dem Speicher auszulesen. Diese Vorgänge betreffen nicht den Betriebsablauf bei den Verkaufsvorgängen, sondern das Programmieren der Waage bzw. die externe Datensammlung.

Eine andere bekannte Wägevorrichtung (US 6 006 100 A), die für die Überwachung von Versandvorgängen bei Containern und Kisten ausgebildet ist, weist mehrere in einem Funknetz miteinander in Verbindung stehende Einheiten auf. Darunter befindet sich eine Waage und eine Linearvermessungseinrichtung. Auf der Waage wird an einer Kontrollstelle das ungefähre Gewicht des Versandgegenstandes ermittelt. Außerdem werden mit der Linearvermessungseinrichtung die Länge, Breite und Höhe der Versandgegenstände erfaßt. Die gemessenen Werte für das Gewicht und die Linearabmessungen werden in dem Funknetz an einen Drucker übertragen und dort auf einem Streifen ausgedruckt, welcher als Versandbegleitzettel dient. Für die Durchführung von Verkaufsvorgängen ist diese Wägevorrichtung nicht geeignet.

Eine weitere bekannte Wägevorrichtung (US 4 969 112 A) ist dazu bestimmt, eine Last an mehreren Stellen zu messen, wie es insbesondere für den Gewichtsabgleich von Rennwagen der Fall ist. Hierbei sind vier Wägeplattformen, die der Abstützung der vier Räder des Rennwagens dienen, drahtlos mit einer Zentralsteuerung verbunden. Letztere ist mit einer Sichtanzeige und einer Anzahl von Steuertasten ausgestattet. Einige dieser Steuertasten dienen dazu, die Gewichtswerte der einzelnen Wägeplattformen abzurufen und einzeln oder in Kombination auf der Sichtanzeige wiederzugeben. Die übrigen Steuertasten dienen anderen Funktionen, nämlich dem Ein/Ausschalten, der Nullstellung, der Umschaltung der Anzeige in Pfund oder Kilogramm, zur Uhrzeitanzeige und -einstellung, zur Beleuchtungseinschaltung und zum Betätigen eines Druckers. Auch diese Vorrichtung ist nicht für die Durchführung von Verkaufsvorgängen ausgebildet.

Bei einer für die Ermittlung der Stückzahl von mit einem Ident-Code versehenen Presseerzeugnissen dienenden bekannten Vorrichtung (DE 197 53 627 A1) werden Stapel von Presseerzeugnissen auf einem Transportband unter einem Lesegerät hindurch über eine Waage gefördert. Das Lesegerät und die Waage sind über eine Eternetverbindung drahtlos mit einer Datenverarbeitungseinheit verbunden. Letztere ermittelt aus dem von der Waage gemessenen Gesamtgewicht des Stapels und aus dem bekannten Einzelgewicht eines Presseerzeugnisses die in dem Stapel vorhandene Stückzahl. Auch diese Vorrichtung ist nicht zur Durchführung von Verkaufsvorgängen hergerichtet.

Der Erfindung liegt die Aufgabe zugrunde, eine Wägevorrichtung der eingangs genannten Art zu schaffen, die eine hindernisfreie, Anwenderwünschen entsprechende Lokalisierung von Funktionalitäten ermöglicht.

Erfindungsgemäß wird diese Aufgabe dadurch gelöst, daß mehrere eine Anzeigeeinheit aufweisende Funktionseinheiten, die von der gemeinsam benutzbaren Wägezelle aus ansprechbar sind, vorgesehen sind, und daß die Funktionseinheiten voneinander räumlich getrennt sind und ihre Signalverbindung drahtlos ausgebildet ist. Die räumliche Trennung der Funktionseinheiten erlaubt ihre Anordnung an den Stellen, an denen sie aus ergonomischer Sicht günstigerweise angeordnet sein sollen. Durch die drahtlose Ausbildung der Signalverbindungen brauchen keine aufwendigen und störenden Signal- oder Datenkabel verlegt oder installiert zu werden. Hierfür geeignete drahtlose Signalverbindungen sind im Stand der Technik bekannt, beispielsweise die Standards IEEE 802.11 (Wireless LAN), Bluetooth, IrdA oder dgl.

Diese Auflösung der Wägevorrichtung in drahtlos miteinander verbundene Funktionseinheiten bringt eine besonders hohe Flexibilität der Wägevorrichtung in Bezug auf ihre Anpaßbarkeit an unterschiedliche örtliche Gegebenheiten und Anwendungsarten mit sich. Dazu gehört auch, daß die Wägevorrichtung mehrere Anzeigeeinheiten in mehreren voneinander getrennten Funktionseinheiten aufweisen kann, die von ein und derselben Wägezelle aus angesprochen werden. Letztere kann dann von mehreren Verkäufern gemeinsam genutzt werden, wogegen jedem Käufer in räumlich getrennter Anordnung seine eigene Anzeigeeinheit zugeordnet ist. Eine solche Mehrfachnutzung ist nicht nur für die Wägezellen denkbar, sondern auch für Funktionseinheiten anderer Funktionalität, beispielsweise Drucker. Ferner ist auf flexible Weise die redundante Vorhaltung von Funktionseinheiten möglich, wodurch das Problem von Betriebsausfällen bei Störungen beseitigt wird.

Sofern über die Vermeidung aufwendiger Datenkabel hinaus überhaupt jeder Kabelanschluß an Funktionseinheiten vermieden werden soll, können die zur Energieversorgung dienenden, an sich wenig störenden Netzkabel dadurch beseitigt werden, daß in den betreffenden Funktionseinheiten eine netzunabhängige Energiequelle vorgesehen wird, beispielsweise eine Batterie oder eine solare Energiequelle.

Es versteht sich von selbst, daß die maximale räumliche Trennung der Funktionseinheiten und die Reichweite der betreffenden drahtlosen Signalverbindungen miteinander konform gehen müssen. Bei sehr ausgedehnten Installationen kann es in dieser Hinsicht zweckmäßig oder notwendig sein, an einigen Stellen sogenannte Repeater anzuordnen. Beispiele für die Art der drahtlosen Verbindungen sind Funkverbindungen oder Infrarotverbindungen.

In einer vorteilhaften Ausführungsform ist vorgesehen, daß die die Steuereinheit aufweisende Funktionseinheit in einer zentralen Datenverarbeitungsanlage ausgebildet ist, deren Signalverbindungen zu mindestens einem Teil der Funktionseinheiten drahtlos ausgebildet sind. Da sich hierbei mehrere Funktionseinheiten die zentrale Datenverarbeitungsanlage teilen, vereinfacht sich sowohl der gerätemäßige als auch der logische Aufwand. Diese zentrale Datenverarbeitungsanlage (Rechner) kann aus Resondanzgründen auch doppelt vorgesehen sein, was die Ausfallsicherheit der Wägevorrichtung stark erhöht.

Für eine große Gruppe von Anwendungsfällen ist es zweckmäßig, die Wägevorrichtung derart auszugestalten, daß die die Wägezelle aufweisende Funktionseinheit am Tisch einer Verkaufstheke und die mit dieser Funktionseinheit drahtlos verbundene, die Anzeigeeinheit aufweisende Funktionseinheit an der Verglasung einer Auslage der Verkaufstheke angeordnet ist. Die die Wägezelle aufweisende Funktionseinheit kann dabei auf dem Tisch der Verkauftheke stehen oder in den Tisch integriert sein. Die Anzeigeeinheit kann direkt in der Verglasung der Auslage ausgebildet sein.

Zumeist ist es auch von Vorteil, daß eine eine Eingabetastatur aufweisende Funktionseinheit mit mindestens einer der anderen Funktionseinheiten über eine drahtlose Signalverbindung gekoppelt ist. Damit ist die jeweilige Bedienungsperson frei, ihre Bedienungstastatur dorthin zu bringen, wo sie gerade ergonomisch günstig zu bedienen ist.

Ähnlich zweckmäßig ist es, daß mindestens eine einen Drucker aufweisende Funktionseinheit mit mindestens einer der anderen Funktionseinheiten über eine drahtlose Signalverbindung gekoppelt ist. Auf diese Weise kann der Drucker als tragbare Einheit, beispielsweise am jeweils ergonomisch geeigneten Ort einer Verkaufstheke, positioniert werden. Andererseits ist es auch möglich, den Drucker an einer Kasse eines Verkaufsgeschäfts oder in der Kasse integriert vorzusehen.

Im Rahmen der Erfindung ist auch vorgesehen, daß mindestens eine einen Transponder aufweisende Funktionseinheit mit mindestens einer der anderen Funktionseinheiten über eine drahtlose Signalverbindung gekoppelt ist. Jedem Mitglied des Verkaufspersonals kann beispielsweise eine solche Transponder-Funktionseinheit zur Hand gegeben werden, die von einer der Funktionseinheiten, beispielsweise der die Steuereinheit aufweisenden Funktionseinheit, abgefragt wird und ansprechend auf diese Abfrage einen in dem Transponder niedergelegten persönlichen Identifikationscode der betreffenden Verkaufsperson and die Wägevorrichtung überträgt. Dadurch kann einerseits automatisch die Zugriffsberechtigung der betreffenden Person auf die Wägevorrichtung geprüft und andererseits diese Person der von ihr mit Hilfe der Wägevorrichtung durchgeführte Verkaufsvorgang zugeordnet werden.

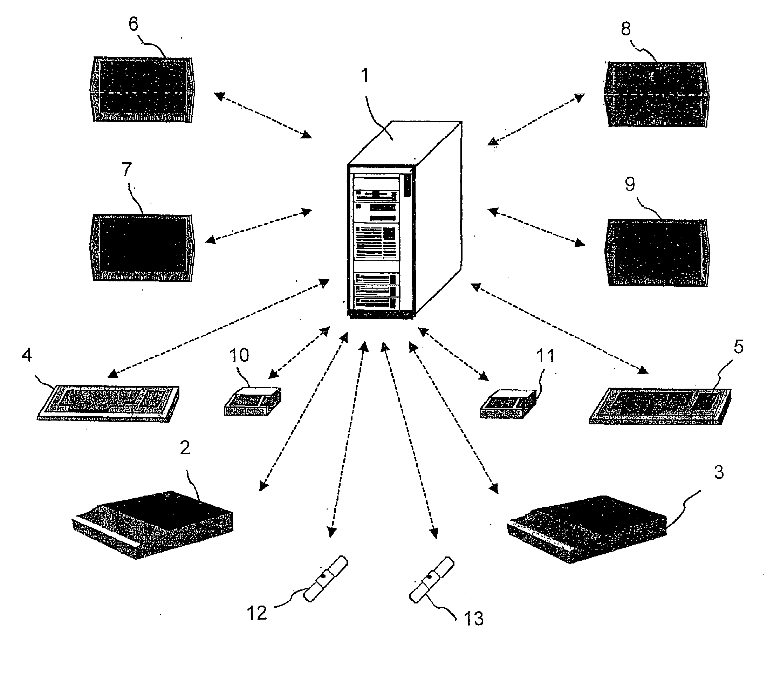

Weitere Merkmale, Einzelheiten und Vorteile der Erfindung ergeben sich aus der folgenden Beschreibung und der Zeichnung, in der ein Ausführungsbeispiel der Erfindung schematisch dargestellt ist.

In dem dargestellten Ausführungsbeispiel einer Wägevorrichtung ist eine zentrale Funktionseinheit 1 durch drahtlose Signalverbindungen, die in der Zeichnung durch gestrichelte Doppelpfeile symbolisiert sind, mit einer Anzahl weiterer Funktionseinheiten signalmäßig gekoppelt. Die zentrale Funktionseinheit 1 ist auf einem zentralen Rechner implementiert und beinhaltet insbesondere eine Steuereinheit für die Betriebsabläufe der Wägevorrichtung.

Unter den weiteren Funktionseinheiten befinden sich zwei Wägebrücken 2, 3, die beispielsweise auf dem Tisch einer Verkaufstheke (nicht dargestellt) aufgestellt oder in diesen Tisch integriert sind. Die Wägebrücken 2, 3 weisen jeweils eine Wägezelle auf, die das Gewicht eines auf die Wägebrücke aufgelegten Wägegutes in ein entsprechendes elektrisches Gewichtsignal umwandeln. Dieses in der Regel analoge Gewichtsignal wird in der Wägebrücke 2, 3 vorverarbeitet und digitalisiert. Der digitalisierte Wert wird über die betreffende drahtlose Signalbindung an die zentrale Funktionseinheit 1 weitergeleitet. Letztere weist eine Auswerteeinheit auf, die den digitalisierten Wert empfängt und daraus einen in einem bestimmten Maßsystem ausgedrückten Gewichtswert bildet. Die Schnittstelle zwischen der zentralen Funktionseinheit 1 und den Wägebrücken 2, 3 kann abweichend von diesem Beispiel aber auch anders ausgeschaltet sein. So können schon in den Wägebrükken 2, 3 jeweils Auswerteeinheiten vorgesehen sein, so daß an die zentrale Funktionseinheit 1 bereits ein vollständiger Gewichtswert im gewählten Maßsystem übertragen wird.

Unter den weiteren Funktionseinheiten befinden sich ferner zwei Eingabetastaturen 4, 5, mit denen für den Betriebsablauf der Wägevorrichtung relevante Informationen wie Daten, beispielsweise Artikelnummern, Einheitspreise, Gesamtpreise oder dergleichen und/oder Befehle in die zentrale Funktionseinheit 1. eingegeben werden können. In letzterer sind beispielsweise für jede Artikelnummer Einheitspreisangaben abgespeichert, die mit den von den Wägebrücken 2, 3 übertragenen Gewichtswerten multipliziert werden, wodurch für das jeweilige Wägegut der Endverkaufspreis gebildet wird. Die Eingabetastaturen 4, 5 können beispielsweise jeweils auf dem Tisch einer Verkaufstheke oder auch an einer Kasse des Verkaufslokals aufgestellt sein.

Unter den weiteren Funktionseinheiten befinden sich auch vier Sichtanzeigeeinheiten 6, 7, 8 und 9. Auf diesen Sichtanzeigeeinheiten werden die von der zentralen Funktionseinheit 1 in Abhängigkeit von den Eingaben der Wägebrücken 2, 3 und der Eingabetastaturen 4, 5 gebildeten und ausgegebenen Sichtanzeigedaten angezeigt. Dabei dienen die Sichtanzeigeeinheiten 6 und 8 zur Anzeige der für den Käufer bestimmten Anzeigedaten, beispielsweise Gesamtgewicht, Einheitspreis und Endpreis des Wieggutes. Diese Sichtanzeigeeinheiten 6, 8 sind deshalb an für den Käufer gut einsehbaren Stellen angeordnet, beispielsweise in der Verglasung einer Auslage einer Verkaufstheke. Dagegen sind die Sichtanzeigeeinheiten 7 und 9 den Sichtanzeigeeinheiten 6 bzw. 8 jeweils zugeordnet, aber für den Verkäufer bestimmt. Auf ihnen werden die für den Verkäufer relevanten Daten der auf den Sichtanzeigeeinheiten 6 bzw. 8 dargestellten Verkaufsvorgänge angezeigt. Sie sind deshalb an für den Verkäufer ergonomisch günstigen Stellen angeordnet.

Ferner befinden sich unter den weiteren Funktionseinheiten zwei Drucker 10, 11, mit denen beispielsweise Verkaufsbelege, Preisaufkleber, Begleitzettel oder dergleichen im Zusammenhang mit den auf der Wägevorrichtung abgewickelten Verkaufsvorgängen ausgedruckt werden können. Diese Drucker können beispielsweise an der Verkaufstheke oder der Kasse aufgestellt oder beispielsweise auch in die Kasse integriert sein.

Schließlich befinden sich unter den weiteren Funktionseinheiten zwei Transponder 12, 13, die von der zentralen Funktionseinheit 1 über die betreffenden drahtlosen Signalverbindungen abgefragt werden. Ansprechend auf die Abfrage übertragen die Transponder 12, 13 eine in ihnen abgespeicherte Personenidentifikationsinformation an die zentrale Funktionseinheit 1. Dadurch kann letztere den Zugriff der dadurch identifizierten Person, beispielsweise eines Verkäufers, auf die verschiedenen Funktionen der Wägevorrichtung kontrollieren.

In dem dargestellten Ausführungsbeispiel sind sämtliche Signalverbindungen zwischen den Funktionseinheiten drahtlos ausgebildet. Alternativ könnte aber auch ein Teil dieser Signalverbindungen verdrahtet sein, sofern dadurch die erwünschte Flexibilität und Ergonomie der Wägevorrichtung nicht beeinträchtigt wird. Weiter ist zu beachten, daß in dem dargestellten Ausführungsbeispiel jede der Funktionseinheiten mit einer einzigen Funktionalität ausgestattet ist. Dies ist aber nicht notwendig. Beispielsweise könnten in einer oder mehrerer der Funktionseinheiten zwei oder mehr Funktionalitäten implementiert sein, beispielsweise eine Kombination von Eingabetastatur- und Sichtanzeigefunktion.

Neben den in dem speziellen Ausführungsbeispiel genannten Funktionseinheiten können natürlich auch andere Funktionseinheiten vorgesehen und drahtlos angekoppelt sein, beispielsweise Modems, Kartenleser, Scanner, Telefone oder dergleichen.

### Verzeichnis der Bezugszeichen

- 1: zentrale Funktionseinheit
- 2: Wägebrücke
- 3: Wägebrücke
- 4: Eingabetastatur
- 5: Eingabetastatur
- 6: Sichtanzeigeeinheit
- 7: Sichtanzeigeeinheit
- 8: Sichtanzeigeeinheit
- 9: Sichtanzeigeeinheit
- 10: Drucker
- 11: Drucker
- 12: Transponder
- 13: Transponder

## Patentansprüche

1. Wägevorrichtung mit mehreren Funktionseinheiten, von denen jeweils mindestens zwei durch eine Signalverbindung miteinander gekoppelt sind und von denen mindestens eine (2, 3) eine von mehreren Verkaufspersonen gemeinsam benutzbare Wägezelle zur Bildung eines dem Gewicht eines auf die Wägezelle aufgelegten Wiegegutes entsprechenden elektrischen Signals, mindestens eine (1) eine Auswerteeinheit zur Bildung eines in einem Maßsystem ausgedrückten Gewichtswertes aus dem über die betreffende Signalverbindung zugeleiteten Gewichtssignal, mindestens eine (6, 7, 8, 9) eine Anzeigeeinheit zur Anzeige des über die betreffende Signalverbindung zugeleiteten Gewichtswertes, mindestens eine (1) eine Steuereinheit zur Steuerung des Betriebs der Wägevorrichtung aufweist und von denen mehrere einen Transponder (12, 13) aufweisen, der über die die Steuereinheit (1) aufweisende Funktionseinheit abfragbar ist und ansprechend auf diese Abfrage einen in dem Transponder niedergelegten persönlichen Identifikationskode der betreffenden Verkaufsperson an die Wägevorrichtung überträgt, die **dadurch** automatisch die Zugriffsberechtigung der betreffenden Verkaufsperson auf die Wägevorrichtung prüft und der betreffenden Verkaufsperson den von ihr mit Hilfe der Wägevorrichtung durchgeführten Verkaufsvorgang zuordnet, **dadurch gekennzeichnet, daß** mehrere eine Anzeigeeinheit aufweisende Funktionseinheiten, die von der gemeinsam benutzbaren Wägezelle aus ansprechbar sind, vorgesehen sind, und daß die Funktionseinheiten voneinander räumlich getrennt sind und ihre Signalverbindung drahtlos ausgebildet ist.

2. Wägevorrichtung nach Anspruch 1, **dadurch gekennzeichnet, daß** die die Steuereinheit aufweisende Funktionseinheit (1) in einer zentralen Datenverarbeitungsanlage ausgebildet ist, deren Signalverbindungen zu mindestens einem Teil der Funktionseinheiten drahtlos ausgebildet sind.

3. Wägevorrichtung nach Anspruch 1 oder 2, **dadurch gekennzeichnet, daß** die die Wägezelle aufweisende Funktionseinheit (2, 3) am Tisch einer Verkaufstheke und die mit dieser Funktionseinheit drahtlos verbundene die Anzeigeeinheit aufweisende Funktionseinheit (6, 8) an der Verglasung einer Auslage der Verkaufstheke angeordnet ist.

4. Wägevorrichtung nach einem der Ansprüche 1 bis 3, **dadurch gekennzeichnet, daß** eine eine Eingabetastatur (4, 5) aufweisende Funktionseinheit mit mindestens einer der anderen Funktionseinheiten über eine drahtlose Signalverbindung gekoppelt ist.

5. Wägevorrichtung nach einem der Ansprüche 1 bis 4, **dadurch gekennzeichnet, daß** mindestens eine einen Drucker aufweisende Funktionseinheit mit mindestens einer der anderen Funktionseinheiten über eine drahtlose Signalverbindung gekoppelt ist.

## Claims

1. Weighing device comprising a plurality of functional units, at least two of which are coupled to one another by a respective signal connection and at least one (2, 3) of which includes a weighing cell usable jointly by a plurality of sales persons for forming an electrical signal corresponding to the weight of an article placed on the weighing cell, at least one (1) of which includes an evaluation unit for forming a weight value expressed in a system of units from the weight signal supplied via the respective signal connection, at least one (6, 7, 8, 9) of which includes a display unit for displaying the weight value supplied via the respective signal connection, at least one (1) of which includes a control unit for controlling the operation of the weighing device, and a plurality of which include a transponder (12, 13) which can be interrogated via the functional unit that includes the control unit (1) and, in response to this interrogation, transmits a personal identification code of the respective sales person stored in the transponder to the weighing device, which as a result automatically checks the authorisation of the respective sales person to have access to the weighing device and allocates to the respective sales person the sales process carried out by that person with the aid of the weighing device, **characterised in that** a plurality of functional units which include a display unit and are addressable by the jointly usable weighing cell are provided, and **in that** the functional units are spatially separate from one another and their signal connection is in the form of a wireless connection.

2. Weighing device according to claim 1, **characterised in that** the functional unit (1) which includes the control unit is contained in a central computer, the signal connections of which to at least some of the functional units are in the form of wireless connections.

3. Weighing device according to claim 1 or 2, **characterised in that** the functional unit (2, 3) which includes the weighing cell is arranged on the table of a sales counter and the functional unit (6, 8) wirelessly connected to said functional unit (2, 3) and including the display unit is arranged on the glazed portion of a display of the sales counter.

4. Weighing device according to any one of claims 1 to 3, **characterised in that** a functional unit including an inputting keyboard (4, 5) is coupled to at least one of the other functional units via a wireless signal connection.

5. Weighing device according to any one of claims 1 to 4, **characterised in that** at least one functional unit including a printer is coupled to at least one of the other functional units via a wireless signal connection.

## Revendications

1. Dispositif de pesée avec plusieurs unités fonctionnnelles, dont à chaque fois au moins deux sont couplées par une liaison de signaux l'une avec l'autre et dont au moins une (2,3) présente une cellule de pesée utilisable par plusieurs vendeurs conjointement pour former un signal électrique correspondant au poids d'un article à peser posé sur la cellule de pesée, au moins une (1) présente une unité d'évaluation pour former une valeur de poids exprimée dans un système de mesure à partir du signal de poids reçu par la liaison de signaux concernés, au moins une (6,7,8,9) présente une unité d'affichage pour afficher la valeur de poids transmise par la liaison de signaux concernée, au moins une (1) présente une unité de commande pour commander le fonctionnement du dispositif de pesée, et dont plusieurs présentent un transpondeur (12,13) qui peut être interrogé par l'unité fonctionnelle présentant l'unité de commande (1) et qui, en réponse à cette interrogation, transmet un code d'identification personnel stocké dans le transpondeur du vendeur concerné au dispositif de pesée, qui vérifie de ce fait automatiquement le droit d'accès du vendeur concerné au dispositif de pesée et qui associe au vendeur concerné l'opération de vente effectuée par celui-ci à l'aide du dispositif de pesée, **caractérisé en ce que** plusieurs unités fonctionnelles présentant une unité d'affichage, qui peuvent être activées par la cellule de pesée utilisable conjointement, sont prévues, et **en ce que** les unités fonctionnelles sont séparées spatialement les unes des autres, et leur liaison de signaux est réalisée sans fil.

2. Dispositif de pesée selon la revendication 1, **caractérisé en ce que** l'unité fonctionnelle (1) présentant l'unité de commande est réalisée dans une installation de traitement de données centrale, dont les liaisons à signaux vers au moins une partie des unités fonctionnelles sont réalisées sans fil.

3. Dispositif de pesée selon la revendication 1 ou 2, **caractérisé en ce que** l'unité fonctionnelle (2,3) présentant la cellule de pesée est disposée sur la table d'un comptoir de vente, et l'unité fonctionnelle (6,8) reliée sans fil avec cette unité fonctionnelle, présentant l'unité d'affichage, est disposée à la vitrification d'une vitrine du comptoir de vente.

4. Dispositif de pesée selon l'une des revendications 1 à 3, **caractérisé en ce qu'**une unité fonctionnelle présentant un clavier d'entrée (4,5) est couplée avec au moins une des autres unités fonctionnelles par une liaison de signaux sans fil.

5. Dispositif de pesée selon l'une des revendications 1 à 4, **caractérisé en ce qu'**au moins une unité fonctionnelle munie d'une imprimante est couplée avec au moins l'une des autres unités fonctionnelles par une liaison de signaux sans fil.
